# EUROPEAN PATENT SPECIFICATION

(11) **EP 3 401 822 B1**
(45) Date of publication and mention of the grant of the patent: **30.12.2020**
(21) Application number: 16883464.6
(22) Date of filing: 30.12.2016
(51) Int. Cl.: G06F 21/32

(54) **INFORMATION IMAGE DISPLAY METHOD AND APPARATUS**
VERFAHREN UND VORRICHTUNG ZUR ANZEIGE VON INFORMATIONSBILDERN
APPAREIL ET PROCÉDÉ D'AFFICHAGE D'UNE IMAGE D'INFORMATION

(30) Priority: 06.01.2016 CN 201610009271
(43) Date of publication of application: 14.11.2018
(73) Proprietor: Alibaba Group Holding Limited, Grand Cayman (KY)
(72) Inventor: WANG, Jing, Hangzhou 310099 (CN); TONG, Wenxia, Hangzhou 310099 (CN); ZENG, Jie, Hangzhou 310099 (CN)
(74) Representative: Fish & Richardson P.C.
(86) International application number: PCT/CN2016/113443
(87) International publication number: WO 2017/118339

(56) References cited:
- EP-A1- 2 192 519
- CN-A- 103 064 515
- CN-A- 103 678 981
- CN-A- 105 023 009
- CN-A- 105 094 874
- US-A1- 2014 292 649
- US-A1- 2015 047 017
- US-A1- 2015 199 554
- US-A1- 2015 277 652

## Description

### TECHNICAL FIELD

The present disclosure relates to the field of information processing technologies, and in particular, to an information image display method and apparatus.

### BACKGROUND

With the development of the intelligent device technologies, a user's devices such as a mobile phone and a watch, can support many short-distance information exchange methods. Many application scenarios emerge accordingly, such as mobile payment, access control, and business card exchange.

Currently, when the user uses an intelligent device such as the mobile phone for two-dimensional (2D) code fast payment, a typical operation process can include taking out, waking up, unlocking the mobile phone, finding, running payment function APP, finding a 2D code functional subpage, and performs a 2D code display operation. It can be seen that, in practical application, performing a complete 2D code display operation takes several steps. The steps are inconvenient for a user to operate, and cannot adapt well to high user density scenarios, such as in supermarket or on public transportation.

US 2014/292649 describes a method for switching tasks. The device includes a button configured to receive an input; a display configured to display task switching screens; and a processor configured to set a task switching mode in response to the button receiving a first input, and control the display to display the task switching screens in response to the button receiving a second input.
EP 2 192 519 describes a method of launching applications on a computing apparatus. The method comprises receiving a biometric candidate, determining that said biometric candidate matches one of a plurality of stored biometric templates, each stored biometric template being associated with a different application, determining that said stored biometric template is associated with unlocking said computing apparatus, and unlocking said computing apparatus; and launching execution of said application.
US 2015/199554 describes a system that includes a fingerprint sensor, an application processor, and an auxiliary processor. The application processor is operable to arm the fingerprint sensor prior to the application processor entering a low power or sleep mode. The auxiliary processor is to receive a state output from the fingerprint sensor. The state output is to cause activation of one or more functions of the auxiliary processor upon fingerprint authentication while leaving the application processor in the low power or sleep mode.
US 2015/277652 describes a mobile terminal capable of performing a fingerprint recognition function that includes: a sensing unit configured to sense a fingerprint of a user's finger when the user's finger touches a display unit, in a state in which the fingerprint recognition function is executed; and a controller configured to determine whether to perform an operation related to an event that occurs in the mobile terminal on the basis of a degree of recognition of the sensed fingerprint.
US 2015/047017 describes a mobile device providing a user interface of a different security level according to a fingerprint verification and a touch input trajectory and a method of controlling therefor.

### SUMMARY

To resolve the earlier-described technical problem, the present disclosure provides information image display methods and apparatuses. The technical solutions are as follows:
According to a first aspect of the present disclosure, an example information image display method is applied to user equipment having a fingerprint module, and includes: obtaining a fingerprint information detection result detected by the fingerprint module; and in a state of detecting the fingerprint information, invoking an information image display functional interface in an APP where the information image is located, so as to display the information image on a user equipment screen.

According to a second aspect of the present disclosure, an example information image display apparatus is applied to user equipment having a fingerprint module, and includes: a detection control module, configured to obtain a fingerprint information detection result detected by the fingerprint module; and a display control module, configured to: in a state of detecting the fingerprint information, invoke an information image display functional interface in an APP where the information image is located, so as to display the information image on a user equipment screen.

According to a third aspect of the present disclosure, an example barcode payment method is applied to user equipment having a fingerprint module, and includes: obtaining a fingerprint information detection result detected by the fingerprint module; and in a state of detecting the fingerprint information, invoking a payment barcode display interface in a payment APP, so as to display a payment barcode image on a user equipment screen.

According to a fourth aspect of the present disclosure, an example barcode payment apparatus is applied to user equipment having a fingerprint module, and includes: a detection control module, configured to obtain a fingerprint information detection result detected by the fingerprint module; and a payment barcode display control module, configured to: in a state of detecting the fingerprint information, invoke a payment barcode display interface in a payment APP, so as to display a payment barcode image on a user equipment screen.

According to the technical solutions provided in the present disclosure, the fingerprint information is used as a trigger condition for displaying the information image. After the fingerprint information is detected, the information image display functional interface in the information image APP can be automatically invoked by invoking the fingerprint module in the user equipment, so as to display the information image by avoiding complex operation steps such as wakening the device and unlocking the device, and fast displaying the information image.

It should be understood that the previous general description and the following detailed description are merely an example for explanation, and do not limit the present disclosure. The scope of the invention is defined in the claims.

### BRIEF DESCRIPTION OF DRAWINGS

To describe the technical solutions in the implementations of the present disclosure or in the existing technology more clearly, the following briefly introduces the accompanying drawings needed for describing the implementations or the existing technology. Apparently, the accompanying drawings in the following description merely show some implementations recorded in the present disclosure, and a person of ordinary skill in the art can still derive other drawings from these accompanying drawings without creative efforts.
FIG. 1 is a first schematic flowchart illustrating an information image display method according to the present disclosure;
FIG. 2 is a schematic diagram of a specific application scenario of a solution according to the present disclosure;
FIG. 3 is a second schematic flowchart illustrating an information image display method according to the present disclosure;
FIG. 4 is a first schematic structural diagram of an information image display apparatus according to the present disclosure;
FIG. 5 is a second schematic structural diagram of an information image display apparatus according to the present disclosure;
FIG. 6 is a third schematic structural diagram of an information image display apparatus according to the present disclosure; and
FIG. 7 is a schematic structural diagram of a device for configuring an apparatus according to the present disclosure.

### DESCRIPTION OF IMPLEMENTATIONS

To make a person skilled in the art better understand the technical solutions in the present disclosure, the following describes the technical solutions in the implementations of the present disclosure in detail with reference to the accompanying drawings in the implementations of the present disclosure. Apparently, the described implementations are merely part of the implementations of the present disclosure.

An information image display solution provided in the present disclosure can be applied to user equipment having a fingerprint module. The fingerprint module here may be a general term of modules that include a series of functions such as fingerprint collection, matching operation, and authentication or recognition decision. Certainly, to display an information image, the user equipment can further have a basic display function. The user equipment can be a compound device such as a mobile phone, a tablet computer, a smartwatch; or can be a single-function device such as an electronic business card or an electronic label. The user equipment is not limited in the present disclosure. In the present disclosure, the information image can be a functional interface such as a web page in an APP, or can be a human-computer interaction interface such as a payment interface. The information image can be a 2D code (or referred to as a 2D barcode), a one-dimensional barcode, or a variable barcode. The application scenarios can be payment, access control, business card exchange, etc. The application scenarios do not affect implementation of the present disclosure.

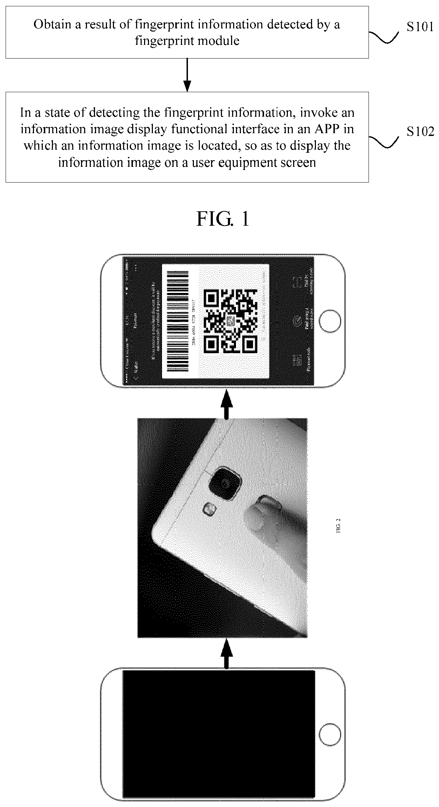

FIG. 1 shows a flowchart illustrating an information image display method according to the present disclosure. The method can be performed by a mobile terminal device such as a mobile phone and can include the following steps.

S101. Obtain a fingerprint information detection result detected by a fingerprint module.

S102. In a state of detecting the fingerprint information, invoke an information image display functional interface in an APP where the information image is located, so as to display the information image on a user equipment screen.

In the present disclosure, the fingerprint information can be used to fast trigger a specific functional interface in a specific APP, so as to fast invoke the specific functional interface in the specific APP, for example, invoke a "payment code" functional page in a digital wallet APP, or a "my business card" functional page in a business card APP. As such, when the mobile phone is powered on, the fingerprint information detection result detected by the fingerprint module can be obtained. If the fingerprint information can be detected, the specific functional page in the earlier-described specific APP is directly displayed, and a related information image is displayed, so that an operation of displaying the information image is simplified.

In the present disclosure, after detecting the fingerprint information, the device can directly invoke a specific functional interface in a specific APP instead of directly invoking the APP. It can reduce the number of steps used for opening the specific functional interface by a user, and improve operation efficiency.

In the present disclosure, when the specific functional interface displays an information image, a static information image generated in advance can be obtained, or an information image can be generated in real time. For example, in a fast display scenario of a payment barcode interface in a payment APP, when the payment barcode interface is displayed, an information image of a payment barcode can be a static image or a dynamically changeable image generated in real time. In practical application, the specific APP can be started in advance and run in the system background, so as to fast invoke the APP when the information image needs to be displayed. Alternatively, the specific APP may not be started in advance. In such case, after detecting the fingerprint information, the device can start the specific APP and run the APP in the system foreground or the system background, so as to fast display the information image and reduce occupied memory resources.

In practical application, after detecting the fingerprint information, the device can first check whether a corresponding APP has run in the system background. If yes, the device directly switches to the APP, and jumps to a specific functional interface that is used for displaying an information image. Otherwise, the device starts the APP, and runs the APP in the system foreground or the system background, and jumps to a specific functional interface that is used for displaying an information image.

In practical application, an association between the fingerprint information and the operation of "invoking the specific functional interface" can be established in advance, so as to directly jump to the specific functional interface instead of a home screen after the fingerprint information is detected. A related setting can be performed in a system of the mobile terminal, so as to establish an association between the fingerprint information and the invoked specific functional interface. When the fingerprint information is detected, the specific functional interface is fast invoked. Alternatively, whether fast invoking of a specific functional interface in an APP installed in the system is supported can be set in the APP, and if the setting is yes, the fingerprint information is associated with the specific functional interface. For example, in a mobile terminal payment APP's setting interface, a user can set the feature of fast invoking a 2D payment code with fingerprint, and can set the specific fingerprint. Alternatively, default setting in the system can be used, and the user can associate a fingerprint to the default setting. In the present disclosure, the specific APP and the specific functional interface can be predetermined by the user or set by the system, etc. A specific fingerprint can be set by the user.

In an implementation, when the fingerprint module detects the fingerprint information, an authentication processing function of the fingerprint module can be used with a user authentication mechanism to improve security of using the information image. To be specific, after the fingerprint information is detected, whether the fingerprint information matches the predetermined fingerprint is determined. If the fingerprint information matches the predetermined fingerprint, the information image can be fast displayed. In the association between the fingerprint information and the operation of invoking the specific functional interface, specific fingerprint information can be set as a trigger condition for fast invoking the specific functional interface. The device user needs to record one or more pieces of fingerprint information of the user in advance, and the fingerprint module generates and stores fingerprint authentication information. In practical application, after detecting fingerprint information, the fingerprint module of the user equipment further determines whether the detected fingerprint information matches the prestored fingerprint authentication information. The information image can be displayed only when the fingerprint information matches the prestored fingerprint authentication information. When the fingerprint information does not match the prestored fingerprint authentication information (or the fingerprint information is not detected), the user equipment screen does not display the information image. Such trigger mechanism can effectively confirm that a current operator of the user equipment is an authorized user, so as to avoid loss caused by an unauthorized user operating the user equipment. A specific fingerprint collection and authentication algorithm is not limited in the present disclosure. A conventional fingerprint collection and authentication algorithm can be used.

An example of using a mobile phone barcode (including a one-dimensional barcode, a 2D barcode, and the like) for fast payment is provided below to describe the present disclosure in detail. More specifically, in a payment application, a payment barcode interface can be fast invoked based on the present disclosure.

In an implementation, a detection function of the fingerprint module can be continuously enabled. The fingerprint module can detect fingerprint information of the user in real time, and reports the fingerprint information intermittently. To be specific, the user equipment can intermittently obtain the fingerprint information detected by the fingerprint module, so that the user equipment obtains the fingerprint information and then performs corresponding processing. As such, the mobile phone screen can fast display a payment barcode whenever the user inputs fingerprint information, so that the user can fast trigger a barcode to be displayed at any time using a fingerprint. In other words, the mobile phone can detect the fingerprint information in real time using the fingerprint module, and fast start a related specific functional interface at any time by collecting fingerprint information.

In an implementation, the result of the fingerprint information detected by the fingerprint module can be obtained when the user equipment is in an unused mode. The unused mode can be one or more of a locked mode, a sleep mode, and a standby mode. As such, the mobile phone can collect fingerprint information in some specific modes and can fast open a specific functional interface in a related APP.

Among the earlier-described unused modes, the locked mode can represent a limitation on permission for the user to operate the device; the sleep mode and the standby mode can describe a working status of a software or hardware module of the device. The sleep mode and the standby mode are not expressly classified in definition. In some cases, the earlier-described unused modes can simultaneously exist in one device. For example, some devices can be automatically locked after a period of standby or sleep time, or automatically switch a specific software/hardware module to a standby mode or a sleep mode after being locked for a period of time. In conclusion, a common feature of the earlier-described modes is that, if the device is currently in one of these modes, a conventional operation of displaying the barcode by the user is complex. Using the present disclosure enables the user to skip the operation steps such as wakening the device and unlocking the device, and directly display the barcode. In addition, it can reduce enabling time for a function of obtaining a fingerprint detection result, so as to reduce power consumption of the device.

In an implementation, it can be further set that the fingerprint module detects the fingerprint information only in the unused mode, so as to avoid power consumption caused by the fingerprint module. For example, when the mobile phone is in a locked and screen-off state, a detection function of the fingerprint module can be disabled. After the mobile phone is wakened, the fingerprint module can start to detect a fingerprint.

In an implementation, based on an operation sequence of "first wakening and then unlocking" an intelligent device, a time point for obtaining a detection result from the fingerprint module can be set in a time period "after the user equipment is wakened from the sleep mode but is still locked". It reduces the enabling time for a function of obtaining a fingerprint detection result, so as to reduce power consumption of the device.

In an implementation, it can be further set that the fingerprint module detects the fingerprint information only "after the user equipment is wakened from the sleep mode but is still locked", so as to further reduce power consumption caused by the fingerprint module.

In other words, in most time when the mobile phone is not used (for example, when the mobile phone is put in a pocket or a bag), the function of obtaining a fingerprint detection result or the detection function of the fingerprint module can be disabled. After the device is wakened up by other methods (for example, a power key or a volume key), the mobile phone starts a corresponding function, which may include the following cases depending on a fingerprint detection result:
(1) The user inputs fingerprint information to fast display a payment barcode interface.
(2) The user properly unlocks the mobile phone (using a password, a gesture, etc). After successfully unlocked, the mobile phone enters a used mode, and disables the detection function of the fingerprint module.
(3) The user inputs no information, and the mobile phone may be wakened due to a misoperation. After a period of time, the mobile phone enters the sleep mode again, and disables the detection function of the fingerprint module.

It can be seen that using the present disclosure can further reduce enabling time for the fingerprint module after the user's basic operation habits are adapted to, so as to reduce power consumption of the device.

In the present disclosure, a working mode of the fingerprint module is not limited. For example, the fingerprint module can always detect a fingerprint after the user equipment is powered on, or during a predetermined time period, or reports a fingerprint intermittently, or a processor in the mobile phone actively invokes the fingerprint module for working. A specific working mode of the fingerprint module can be controlled or set based on a specific need.

In an implementation, after the information image is displayed, if no other operation of the user on the device is detected in a period of time, the device stops displaying the information image, so as to prevent the information image from being secretly photographed or stolen, and improve information use security. A duration threshold for stopping displaying the information image can be set based on a practical requirement, for example, 30 seconds or 60 seconds. A specific implementation of stopping displaying the information image can include exiting a specific information image display functional interface, exiting a specific APP, returning to a system standby screen, restoring the device to the locked mode, the sleep mode, etc. This is not limited in the present disclosure.

FIG. 2 shows a schematic diagram of a specific implementation scenario of applying the present disclosure to merchant payment. When the mobile phone is in a sleep mode and locked mode, and the user places a finger on a fingerprint collector on the back of the mobile phone, a fingerprint module collects fingerprint information and performs authentication on the fingerprint information. After the authentication succeeds, a payment barcode (including a one-dimensional barcode and a 2D barcode) image in a payment APP is triggered to be displayed on the mobile phone screen. If the user performs no other operation on the mobile phone in 60 seconds, the payment barcode image displayed on the mobile phone screen disappears.

In an implementation, the device can be further unlocked using fingerprint information. In such case, a function of "unlocking the device using a fingerprint" and a function of "fast displaying an information image using a fingerprint" can be separately used.

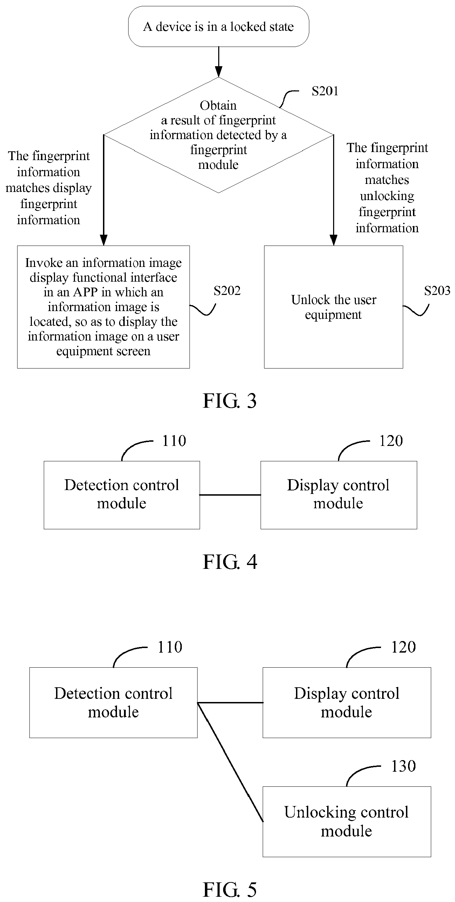

The user can respectively input fingerprint authentication information in advance for displaying an information image ("display fingerprint") and fingerprint authentication information for unlocking the user equipment ("unlocking fingerprint"), and respectively establish an association between the "display fingerprint" and an operation of "invoking an information image display interface in a specific APP", and an association between the "unlocking fingerprint" and operation of "unlocking the user equipment". Further, as shown in FIG. 3, when the user equipment is in a locked mode, after detecting the user-input fingerprint information, the fingerprint module performs different processing based on a matching result between the currently detected fingerprint information and the prestored fingerprint information.

S201. When the user equipment is in a locked mode, obtain a fingerprint information detection result detected by the fingerprint module.

When the fingerprint information is not detected, no operations are performed. Alternatively, when the fingerprint information is detected, if the detected fingerprint information matches the "display fingerprint", performs S202: Invoke an information image display functional interface in an information image APP to display an information image on a user equipment screen.

If the detected fingerprint information matches the "unlocking fingerprint", perform S203: Unlock the user equipment.

A mobile phone payment barcode is still used as an example. Based on use habits, the user can input a fingerprint of the right index finger as the "unlocking fingerprint", and input a fingerprint of the right middle finger as the "display fingerprint". In practical application, after the user takes out and wakens the mobile phone, an unlocking prompt is displayed on the mobile phone screen. In such case, if the user needs to fast display a payment barcode, the user places the middle finger on the fingerprint collector. After a matching success, an APP is invoked and the payment barcode is displayed. If the user needs to use another function of the mobile phone, the user places the index finger on the fingerprint collector. After a matching success, the mobile phone is unlocked in a default mode. As such, two operations of "fast displaying" and "unlocking using a fingerprint" can be effectively distinguished, without interfering the user's normal use habits.

In an implementation, the same finger can be used to perform the functions of unlocking the user equipment and fast displaying an information image. More specifically, the same fingerprint information can be used as both a fingerprint for unlocking the user equipment and a fingerprint for fast displaying an information image. In addition, a time length for collecting a fingerprint can be set to distinguish whether the collected fingerprint is used for unlocking the user equipment or fast displaying a specific information image. For example, the fingerprint module collects the user's fingerprint information, and records a time period when the user's fingerprint stays on a fingerprint sensor. If the time period is within Is, the fingerprint is considered as the fingerprint for unlocking the user equipment, and the device is unlocked; or if the time period exceeds Is, the fingerprint is considered as the fingerprint for fast displaying a specific information image (for example, a payment barcode page in the payment APP), an information image display functional interface is fast invoked. Certainly, there may be different implementations in other scenarios. For example, to unlock the user equipment or fast display an information image using one fingerprint, the fingerprint sensor can be integrated with a pressure sensor, and pressure obtained during fingerprint collection is detected, so as to determine whether to unlock the user equipment or fast display an information image.

Certainly, in some implementations, a specific information image in a specific APP can be invoked by detecting fingerprint information and using another method. For example, the user can pre-specify one or more keys as password to trigger the display of an information image. The key can be a physical key or a touch-based virtual key on the mobile phone, or a virtual key on a touchscreen operating system interface, or a specific application interface. When the user needs to fast display an information image, the user further needs to press the customized key while inputting fingerprint information. The device needs not only to obtain a fingerprint information detection result detected by the fingerprint module but also to determine whether a predefined key is pressed. A later information image display operation is triggered only when both "the fingerprint information is detected" and "the predefined key is pressed" are performed.

A mobile phone payment barcode is still used as an example. Based on use habits, the user can specify a "volume decrease" key as the predefined key. In practical application, the user takes out the mobile phone, places a finger (for example, a right index finger) on the fingerprint collector, and presses and holds the "volume decrease" key with another finger (for example, the right thumb) at the same time. The mobile phone detects that the earlier-described two conditions are both met, and then invokes an APP to display a payment barcode.

In some implementations, the fingerprint information can be further used to trigger an information image to be fast displayed, and the detected fingerprint information does not need to be actually authenticated. In other words, any fingerprint information can trigger the information image to be fast displayed. For example, when a specific functional interface in a specific APP is displayed using the earlier-described predefined key, because the predefined key is the user's private information (predefined by the user), a payment barcode can be started without comparing currently detected fingerprint information with fingerprint authentication information, so as to ensure security of using a payment 2D code. In addition, a fingerprint matching unlocking mechanism may not be affected. In some other scenarios, the specific functional interface in the specific APP can be invoked after the fingerprint information is detected, without matching and authenticating the fingerprint information. For example, when the mobile phone is in a working mode, if the mobile phone detects fingerprint information, to be specific, when the user places a fingerprint on the fingerprint sensor, a payment barcode display interface in a payment APP can be invoked.

Corresponding to the earlier-described method implementation, the present disclosure further provides an information image display apparatus. As shown in FIG. 4, the apparatus can include: a detection control module 110, configured to obtain a fingerprint information detection result detected by a fingerprint module; and a display control module 120, configured to: in a state of detecting the fingerprint information, invoke an information image display functional interface in an APP where the information image is located, so as to display the information image on a user equipment screen.

In a specific implementation of the present disclosure, the detection control module 110 can be configured to: obtain the result of the fingerprint information detected by the fingerprint module when the user equipment is in an unused mode, where the unused mode can include a locked mode, a sleep mode, and/or a standby mode.

In a specific implementation of the present disclosure, the detection control module 110 can be configured to: obtain the result of the fingerprint information detected by the fingerprint module, after the user equipment is wakened from the sleep mode but is still in a locked mode.

In a specific implementation of the present disclosure, the detection control module 110 can be further configured to: after the fingerprint information is detected, further determine whether the detected fingerprint information matches prestored fingerprint authentication information that is used for displaying the information image. Correspondingly, the "state of detecting the fingerprint information" used by the display control module 120 is a state in which the fingerprint information is detected, and a determining result is that the fingerprint information matches the prestored fingerprint authentication information.

In a specific implementation of the present disclosure, the fingerprint authentication information for displaying the information image is different from fingerprint authentication information for unlocking the user equipment. Correspondingly, as shown in FIG. 5, the information image display apparatus provided in the present disclosure can further include an unlocking control module 130, configured to: when the user equipment is in a locked mode, detect the fingerprint information; and after it is determined that the detected fingerprint information matches prestored fingerprint authentication information that is used for unlocking the user equipment, unlock the user equipment.

In a specific implementation of the present disclosure, the detection control module 110 can be further configured to: when the user equipment is in an unused mode, determine whether a predefined key is pressed. Correspondingly, the "state of detecting the fingerprint information" used by the display control module 120 is a state in which the fingerprint information is detected, and the predefined key is pressed.

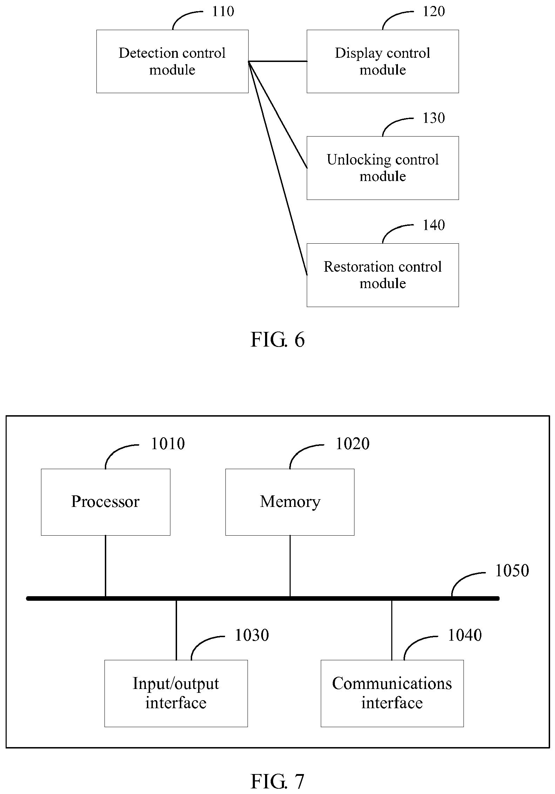

As shown in FIG. 6, in a specific implementation of the present disclosure, the information image display apparatus can further include: a restoration control module 140, configured to: after the information image is displayed, if display duration exceeds a predetermined duration threshold, stop displaying the information image.

It can be understood that the unlocking control module 130 and the restoration control module 140 are two modules with independent functions, and can be both configured in the apparatus shown in FIG. 6, or be separately configured in the apparatus. Therefore, the structure shown in FIG. 6 should not be considered as a limitation on the present disclosure.

The present disclosure further provides a barcode payment apparatus, where the apparatus is applied to user equipment having a fingerprint module, and includes: a detection control module, configured to obtain a fingerprint information detection result detected by the fingerprint module; and a payment barcode display control module, configured to: in a state of detecting the fingerprint information, invoke a payment barcode display interface in a payment APP, so as to display a payment barcode image on a user equipment screen.

The barcode payment apparatus can be an implementation of the image display apparatus in a specific application environment. Therefore, for a specific implementation principle and structure illustration of the barcode payment apparatus, refer to descriptions in the implementation of the information image display apparatus and descriptions in FIG. 4 to FIG. 6. Details are not repeatedly described in this implementation again.

In addition, for a specific implementation process of functions and purposes of each module in the apparatus, refer to an implementation process of a corresponding step in the earlier-described method. Details are not described here again.

The information image display apparatus or the barcode payment apparatus provided in the present disclosure can be applied to devices such as a mobile phone, a tablet computer, and a smartwatch. FIG. 7 is a schematic diagram of a hardware structure of a device for configuring the earlier-described apparatus, according to the present disclosure. The device can include a processor 1010, a memory 1020, an input/output interface 1030, a communications interface 1040, and a bus 1050. The processor 1010, the memory 1020, the input/output interface 1030, and the communications interface 1040 communicate with each other and are connected to each other inside the device using the bus 1050.

The processor 1010 can be implemented by a general-purpose CPU (Central Processing Unit, central processing unit), a microprocessor, an application-specific integrated circuit (Application-Specific Integrated Circuit, ASIC), or one or more integrated circuits, and is configured to execute a related program, so as to implement the technical solutions provided in the present disclosure.

The memory 1020 can be implemented by a ROM (Read-Only Memory, read-only memory), a RAM (Random Access Memory, random access memory), a static storage device, a dynamic storage device, and the like. The memory 1020 can store an operating system and another application program. When the technical solutions provided in the present disclosure are implemented using software or firmware, a related program code is stored in the memory 1020, and is invoked and executed by the processor 1010.

The input/output interface 1030 is configured to connect to an input/output module, so as to implement information input and output. The input/output module can be configured as a component in the device (not shown in the figure), or can be externally connected to the device to provide a corresponding function. The input device can include a keyboard, a mouse, a touchscreen, a microphone, various sensors, and the like. The output device can include a display, a loudspeaker, a vibrator, an indicator, and the like.

The communications interface 1040 is configured to connect to a communications module (not shown in the figure), so that the device communicates and interacts with another device. The communications module can implement communication in a wired manner (for example, a USB or a network cable) or a wireless manner (for example, a mobile network, WiFi, or Bluetooth).

The bus 1050 includes a channel to transmit information between components (for example, the processor 1010, the memory 1020, the input/output interface 1030, and the communications interface 1040) of the device.

It is worthwhile to note that, although the device shows only the processor 1010, the memory 1020, the input/output interface 1030, the communications interface 1040, and the bus 1050, in a specific implementation process, the device can further include other components needed for normal running. In addition, a person skilled in the art should understand that the earlier-described device can include only a component needed for implementing the present disclosure, and does not need to include all components shown in the figure.

It can be learned from description of the earlier-described implementations that, a person skilled in the art can clearly understand that the present disclosure can be implemented by using software in addition to a necessary universal hardware platform. Based on such an understanding, the technical solutions of the present disclosure essentially or the part contributing to the existing technology can be implemented in a form of a software product. The software product can be stored in a storage medium, such as a ROM/RAM, a magnetic disk, or an optical disc, and include several instructions for instructing a computer device (which can be a personal computer, a server, or a network device) to perform the methods described in the implementations or in some parts of the implementations of the present disclosure.

The implementations in the present disclosure are all described in a progressive method. For same or similar parts in the implementations, refer to these implementations, and each implementation focuses on a difference from other implementations. Especially, an apparatus implementation is basically similar to a method implementation, and therefore is described briefly. For related parts, refer to partial descriptions in the method implementation. The earlier-described apparatus implementations are merely examples. The modules described as separate parts can be or cannot be physically separate. During implementation of the present disclosure, functions of the modules can be implemented in one or more pieces of software and/or hardware. Some or all of the modules can be selected according to an actual need to implement the solutions of the implementations. A person of ordinary skill in the art can understand and implement the implementations of the present disclosure without creative efforts.

The invention is specified in the appended claims.

## Claims

1. A method for displaying an information image, applied to user equipment having a fingerprint module, the method comprising:
obtaining a fingerprint information detection result detected by the fingerprint module (S101, S201); and
in a state of detecting the fingerprint information, wherein the state of detecting the fingerprint information is a state in which one finger of the user is on a fingerprint collector of the user equipment and another finger of the user is pressing a predefined key, wherein the predefined key is pre-specified by the user as a password to trigger display of the information image, invoking, to display the information image on a user equipment screen (S102), an information image display functional interface in an APP wherein the information image is located.

2. The method according to claim 1, wherein obtaining the fingerprint information detection result detected by the fingerprint module comprises:
obtaining the result of the fingerprint information detected by the fingerprint module when the user equipment is in an unused mode, wherein the unused mode is one or more of a locked mode, a sleep mode, and a standby mode.

3. The method according to claim 2, wherein obtaining the result of the fingerprint information detected by the fingerprint module when the user equipment is in the unused mode comprising the sleep mode and the locked mode comprises:
awakening the user equipment from the sleep mode; and
after the user equipment is wakened from the sleep mode and is in a locked mode, obtaining the result of the fingerprint information detected by the fingerprint module.

4. The method according to any one of claims 1 to 3, wherein:
the method further comprises: after the fingerprint information is detected, further determining whether the detected fingerprint information matches prestored fingerprint authentication information that is used for displaying the information image; and
the state of detecting the fingerprint information is a state in which the fingerprint information is detected, and a determining result is that the fingerprint information matches the prestored fingerprint authentication information.

5. The method according to claim 4, wherein the fingerprint authentication information that is used for displaying the information image is different from fingerprint authentication information that is used for unlocking the user equipment; and
the method further comprises: when the user equipment is in a locked mode, detecting (S201) the fingerprint information; and after it is determined that the detected fingerprint information matches prestored fingerprint authentication information that is used for unlocking the user equipment, unlocking (S203) the user equipment.

6. The method according to any one of claims 1 to 3, wherein the predefined key is a physical key.

7. The method according to any one of claims 1 to 3, wherein the method further comprises:
after the information image is displayed, if display duration exceeds a predetermined duration threshold, stopping displaying the information image.

8. The method according to any one of claims 1 to 7, wherein invoking an information image display functional interface in an APP wherein the information image is located comprises obtaining a static information image.

9. The method of claim 8, wherein the obtaining the static information image comprises:
obtaining a pre-generated static information image, or
generating a dynamic information image in real time.

10. The method of any one of claims 1 to 9, wherein the functional interface in the APP comprises a payment barcode interface in a payment APP, and wherein the information image comprises a payment barcode image.

11. The method of any one of claims 8 to 9, further comprising, before invoking an information image display functional interface in an APP wherein the information image is located, starting and running the APP in the user equipment background.

12. The method of any one of claims 8 to 9, further comprising, after the fingerprint information is detected, starting the APP and running the APP in the user equipment foreground or background.

13. The method of any one of claims 8 to 9, further comprising, after the fingerprint information is detected:
determining whether the APP is running in the user equipment background;
if yes, directly switching to the APP and invoking the functional interface used for displaying the information image;
otherwise:
starting the APP and running the APP in the user equipment foreground or background; and
invoking the functional interface used for displaying the information image.

14. An apparatus for displaying an information image, the apparatus comprising a plurality of modules configured to perform the method of any one of claims 1 to 13.

## Patentansprüche

1. Verfahren zum Anzeigen eines Informationsbildes, das auf eine Benutzereinrichtung, die ein Fingerabdruckmodul aufweist, angewendet wird, wobei das Verfahren Folgendes umfasst:
Erhalten eines durch das Fingerabdruckmodul erfassten Ergebnisses der Fingerabdruckinformationserfassung (S101, S201); und
in einem Zustand eines Erfassens der Fingerabdruckinformationen, wobei der Zustand des Erfassens der Fingerabdruckinformationen ein Zustand ist, in dem ein Finger des Benutzers auf einem Fingerabdrucksammler der Benutzereinrichtung liegt und ein anderer Finger des Benutzers eine vordefinierte Taste drückt, wobei die vordefinierte Taste durch den Benutzer als ein Passwort, um die Anzeige des Informationsbildes auszulösen, vorgegeben ist, Aufrufen, um das Informationsbild auf einem Benutzereinrichtungsbildschirm (S102) anzuzeigen, einer Informationsbildanzeige-Funktionsschnittstelle in einer APP, in der sich das Informationsbild befindet.

2. Verfahren nach Anspruch 1, wobei das Erhalten des durch das Fingerabdruckmodul erfassten Ergebnisses der Fingerabdruckinformationserfassung Folgendes umfasst:
Erhalten des Ergebnisses der Fingerabdruckinformationen, die durch das Fingerabdruckmodul erfasst werden, wenn sich die Benutzereinrichtung in einem nicht verwendeten Modus befindet, wobei der nicht verwendete Modus ein gesperrter Modus, ein Stromsparmodus und/oder ein Standby-Modus ist.

3. Verfahren nach Anspruch 2, wobei das Erhalten des Ergebnisses der Fingerabdruckinformationen, die durch das Fingerabdruckmodul erfasst werden, wenn sich die Benutzereinrichtung in dem nicht verwendeten Modus, der den Stromsparmodus und den gesperrten Modus umfasst, befindet, Folgendes umfasst:
Wecken der Benutzereinrichtung aus dem Stromsparmodus; und
nachdem die Benutzereinrichtung aus dem Stromsparmodus geweckt wurde und sich in einem gesperrten Modus befindet, Erhalten des Ergebnisses der Fingerabdruckinformationen, die durch das Fingerabdruckmodul erfasst werden.

4. Verfahren nach einem der Ansprüche 1 bis 3, wobei:
das Verfahren ferner Folgendes umfasst:
nachdem die Fingerabdruckinformationen erfasst wurden, ferner Bestimmen, ob die erfassten Fingerabdruckinformationen mit vorgespeicherten Fingerabdruckauthentifizierungsinformationen, die zum Anzeigen des Informationsbildes verwendet werden, übereinstimmen; und
der Zustand des Erfassens der Fingerabdruckinformationen ein Zustand ist, in dem die Fingerabdruckinformationen erfasst werden, und ein bestimmendes Ergebnis ist, dass die Fingerabdruckinformationen mit den vorgespeicherten Fingerabdruckauthentifizierungsinformationen übereinstimmen.

5. Verfahren nach Anspruch 4, wobei sich die Fingerabdruckauthentifizierungsinformationen, die zum Anzeigen des Informationsbildes verwendet werden, von den Fingerabdruckauthentifizierungsinformationen, die zum Entsperren der Benutzereinrichtung verwendet werden, unterscheiden; und
das Verfahren ferner Folgendes umfasst:
wenn sich die Benutzereinrichtung in einem gesperrten Modus befindet, Erfassen (S201) der Fingerabdruckinformationen; und
nachdem bestimmt wird, dass die erfassten Fingerabdruckinformationen mit vorgespeicherten Fingerabdruckauthentifizierungsinformationen, die zum Entsperren der Benutzereinrichtung verwendet werden, übereinstimmen, Entsperren (S203) der Benutzereinrichtung.

6. Verfahren nach einem der Ansprüche 1 bis 3, wobei die vordefinierte Taste eine physische Taste ist.

7. Verfahren nach einem der Ansprüche 1 bis 3, wobei das Verfahren ferner Folgendes umfasst:
nachdem das Informationsbild angezeigt wird, falls die Anzeigedauer einen zuvor bestimmten Dauerschwellenwert überschreitet, Stoppen des Anzeigens des Informationsbildes.

8. Verfahren nach einem der Ansprüche 1 bis 7, wobei das Aufrufen einer Informationsbildanzeige-Funktionsschnittstelle in einer APP, in der sich das Informationsbild befindet, das Erhalten eines statischen Informationsbildes umfasst.

9. Verfahren nach Anspruch 8, wobei das Erhalten des statischen Informationsbildes Folgendes umfasst:
Erhalten eines zuvor erzeugten statischen Informationsbildes, oder
Erzeugen eines dynamischen Informationsbildes in Echtzeit.

10. Verfahren nach einem der Ansprüche 1 bis 9, wobei die Funktionsschnittstelle in der APP eine Zahlungsbarcode-Schnittstelle in einer Zahlungs-APP umfasst, und wobei das Informationsbild ein Zahlungsbarcode-Bild umfasst.

11. Verfahren nach einem der Ansprüche 8 bis 9, das ferner, vor dem Aufrufen einer Informationsbildanzeige-Funktionsschnittstelle in einer APP, in der sich das Informationsbild befindet, ein Starten und ein Ausführen der APP in dem Hintergrund der Benutzereinrichtung umfasst.

12. Verfahren nach einem der Ansprüche 8 bis 9, das ferner, nachdem die Fingerabdruckinformationen erfasst wurden, das Starten der APP und das Ausführen der APP in dem Vordergrund oder dem Hintergrund der Benutzereinrichtung umfasst.

13. Verfahren nach einem der Ansprüche 8 bis 9, das ferner, nachdem die Fingerabdruckinformationen erfasst wurden, Folgendes umfasst:
Bestimmen, ob die APP in dem Hintergrund der Benutzereinrichtung ausgeführt wird;
falls ja, direktes Wechseln zu der APP und Aufrufen der Funktionsschnittstelle, die zum Anzeigen des Informationsbildes verwendet wird;
andernfalls:
Starten der APP und Ausführen der APP in dem Vordergrund oder dem Hintergrund der Benutzereinrichtung; und
Aufrufen der Funktionsschnittstelle, die zum Anzeigen des Informationsbildes verwendet wird.

14. Vorrichtung zum Anzeigen eines Informationsbildes, wobei die Vorrichtung mehrere Module, die konfiguriert sind, um das Verfahren nach einem der Ansprüche 1 bis 13 durchzuführen, umfasst.

## Revendications

1. Procédé d'affichage d'une image d'information, appliqué à un équipement utilisateur ayant un module d'empreinte digitale, le procédé comprenant :
l'obtention d'un résultat de détection d'informations d'empreinte digitale détecté par le module d'empreinte digitale (S101, S201) ; et
dans un état de détection des informations d'empreinte digitale, dans lequel l'état de détection des informations d'empreinte digitale est un état dans lequel un doigt de l'utilisateur est sur un collecteur d'empreinte digitale de l'équipement utilisateur et un autre doigt de l'utilisateur appuie sur une touche prédéfinie, dans lequel la touche prédéfinie est pré-spécifiée par l'utilisateur en tant que mot de passe pour déclencher l'affichage de l'image d'information, l'invocation, afin d'afficher l'image d'information sur un écran d'équipement utilisateur (S102), d'une interface fonctionnelle d'affichage d'image d'information dans une App dans laquelle se trouve l'image d'information.

2. Procédé selon la revendication 1, dans lequel l'obtention du résultat de détection d'informations d'empreinte digitale détecté par le module d'empreinte digitale comprend :
l'obtention du résultat des informations d'empreinte digitale détectées par le module d'empreinte digitale lorsque l'équipement utilisateur est dans un mode inutilisé, le mode inutilisé étant l'un ou plusieurs parmi un mode verrouillé, un mode veille et un mode attente.

3. Procédé selon la revendication 2, dans lequel l'obtention du résultat des informations d'empreinte digitale détectées par le module d'empreinte digitale lorsque l'équipement utilisateur est dans le mode inutilisé comprenant le mode veille et le mode verrouillé comprend :
l'activation de l'équipement utilisateur du mode veille ; et
après que l'équipement utilisateur a été activé du mode veille et se trouve dans un mode verrouillé, l'obtention du résultat des informations d'empreinte digitale détectées par le module d'empreinte digitale.

4. Procédé selon l'une quelconque des revendications 1 à 3, dans lequel :
le procédé comprend en outre : après la détection des informations d'empreinte digitale, la détermination en outre de savoir si les informations d'empreinte digitale détectées correspondent aux informations d'authentification d'empreinte digitale préenregistrées qui sont utilisées pour afficher l'image d'information ; et
l'état de détection des informations d'empreinte digitale est un état dans lequel les informations d'empreinte digitale sont détectées, et un résultat déterminant est que les informations d'empreinte digitale correspondent aux informations d'authentification d'empreinte digitale préenregistrées.

5. Procédé selon la revendication 4, dans lequel les informations d'authentification d'empreinte digitale qui sont utilisées pour afficher l'image d'information sont différentes des informations d'authentification d'empreinte digitale qui sont utilisées pour déverrouiller l'équipement utilisateur ; et
le procédé comprend en outre : lorsque l'équipement utilisateur est dans un mode verrouillé, la détection (S201) des informations d'empreinte digitale ; et après avoir déterminé que les informations d'empreinte digitale détectées correspondent aux informations d'authentification d'empreinte digitale préenregistrées qui sont utilisées pour déverrouiller l'équipement utilisateur, le déverrouillage (S203) de l'équipement utilisateur.

6. Procédé selon l'une quelconque des revendications 1 à 3, dans lequel la touche prédéfinie est une touche physique.

7. Procédé selon l'une quelconque des revendications 1 à 3, dans lequel le procédé comprend en outre :
après l'affichage de l'image d'information, si la durée d'affichage dépasse un seuil de durée prédéterminé, l'arrêt de l'affichage de l'image d'information.

8. Procédé selon l'une quelconque des revendications 1 à 7, dans lequel l'invocation d'une interface fonctionnelle d'affichage d'image d'information dans une App dans laquelle se trouve l'image d'information comprend l'obtention d'une image d'information statique.

9. Procédé selon la revendication 8, dans lequel l'obtention de l'image d'information statique comprend :
l'obtention d'une image d'information statique pré-générée, ou
la génération d'une image d'information dynamique en temps réel.

10. Procédé selon l'une quelconque des revendications 1 à 9, dans lequel l'interface fonctionnelle dans l'App comprend une interface de code barres de paiement dans une App de paiement, et dans lequel l'image d'information comprend une image de code barres de paiement.

11. Procédé selon l'une quelconque des revendications 8 à 9, comprenant en outre, avant l'invocation d'une interface fonctionnelle d'affichage d'image d'information dans une App dans laquelle se trouve l'image d'information, le démarrage et la mise en oeuvre de l'App en arrière-plan de l'équipement utilisateur.

12. Procédé selon l'une quelconque des revendications 8 à 9, comprenant en outre, après la détection des informations d'empreinte digitale, le démarrage de l'App et la mise en oeuvre de l'App au premier plan ou en arrière-plan de l'équipement utilisateur.

13. Procédé selon l'une quelconque des revendications 8 à 9, comprenant en outre, après la détection des informations d'empreinte digitale :
la détermination de savoir si l'App est mise en oeuvre en arrière-plan de l'équipement utilisateur ;
si oui, le basculement direct vers l'App et l'invocation de l'interface fonctionnelle utilisée pour afficher l'image d'information ;
autrement :
le démarrage de l'App et la mise en oeuvre de l'App en premier plan ou en arrière-plan de l'équipement utilisateur ; et
l'invocation de l'interface fonctionnelle utilisée pour afficher l'image d'information.

14. Appareil pour l'affichage d'une image d'information, l'appareil comprenant une pluralité de modules configurés pour exécuter le procédé selon l'une quelconque des revendications 1 à 13.
